Europäisches Patentamt

European Patent Office

Office européen des brevets

(19)

(11) Publication number: **0 092 498**
**B1**

## EUROPEAN PATENT SPECIFICATION

(12)

(45) Date of publication of patent specification: **27.01.88**

(51) Int. Cl.⁴: **B 60 C 9/20**

(21) Application number: **83630057.4**

(22) Date of filing: **05.04.83**

(54) Tread reinforcement structure for pneumatic tire.

(30) Priority: **16.04.82 US 369338**

(43) Date of publication of application:
**26.10.83 Bulletin 83/43**

(45) Publication of the grant of the patent:
**27.01.88 Bulletin 88/04**

(84) Designated Contracting States:
**DE FR GB IT LU**

(56) References cited:
**DE-A-2 250 284**
**FR-A-1 437 415**
**FR-A-2 176 955**
**FR-A-2 178 802**
**FR-A-2 195 533**
**FR-A-2 246 404**
**IT-A- 514 343**
**US-A-3 897 814**

(73) Proprietor: **THE GOODYEAR TIRE & RUBBER COMPANY**
**1144 East Market Street**
**Akron, Ohio 44316-0001 (US)**

(72) Inventor: **Abbott, John Ronald**
**3501 Northampton Road**
**Cuyahoga Falls Ohio 44221 (US)**

(74) Representative: **Weyland, Joseph Jean Pierre**
**Goodyear Technical Center Luxembourg Patent**
**Department Avenue Gordon Smith**
**L-7750 Colmar-Berg (LU)**

## Description

The present invention relates to pneumatic tires and more particularly to tread reinforcement structures of pneumatic tires wherein one tread reinforcing ply is folded around a second tread reinforcing ply such as further described in the preamble of appended claim 1. Such structures are well known in the tire design and manufacturing technologies (see e.g. FR—A—1 437 415). These structures are known to have the advantages of improved high speed performance characteristics and improved resistance to separations at the axial edges of the tread reinforcement structure.

However, the object of the present invention is to design a tire, and in particular a truck tire, that has an improved resistance to penetration by a foreign object. The resistance of a tire to penetration, in a radial direction, by a foreign object, is referred to herein as the tire's "plunger energy", which shall mean the amount of energy required for a foreign object to penetrate the crown region of a tire in a radial direction. Increased plunger energy can be especially beneficial in radial ply truck tires, which are often subjected to rough road conditions, such as pot-holes, and foreign objects lying on roadways, that subject the tread portion of the tire to extreme stresses in a radial direction. As used herein, a "radial ply tire" shall mean a tire that has the reinforcing elements of its carcass ply oriented at between 80 degrees and 90 degrees with respect to the mid-circumferential plane of the tire. As used herein, "a truck tire" is a tire designed to be mounted upon a rim having a nominal bead diameter of 50.8 centimeters (20 inches) or larger.

The object of the invention is achieved by the means recited in the characterization clause of appended claim 1.

The invention will now be further illustrated by reference to the accompanying drawings, in which:

Figure 1 represents a radial cross-sectional view of a pneumatic tire having a tread-reinforcement structure constructed in accordance with the present invention;

Figure 2 is a view looking radially inward toward the tread-reinforcement structure of the tire shown in Figure 1.

In the specification and the claims, the terms "axial" and "axially" refer to a tire's axis of rotation. The term "axially inward" refers to a direction going from one sidewall of a tire toward the opposite sidewall of the same tire, and conversely "axially outward" refers to a direction going from one sidewall of a tire away from the other sidewall of the same tire. The terms "radial" and "radially" refer to planes in which the axis of rotation of a tire lies. The term "radially inward" refers to a direction going from the tread of a tire toward the axis of rotation of the same tire, while the term "radially outward" refers to a direction going from the axis of rotation of a tire toward the tread of the same tire. The mid-circumferential plane of a tire is a plane perpendicular to the tire's axis of rotation located midway between the sidewalls of the tire at their greatest axial width.

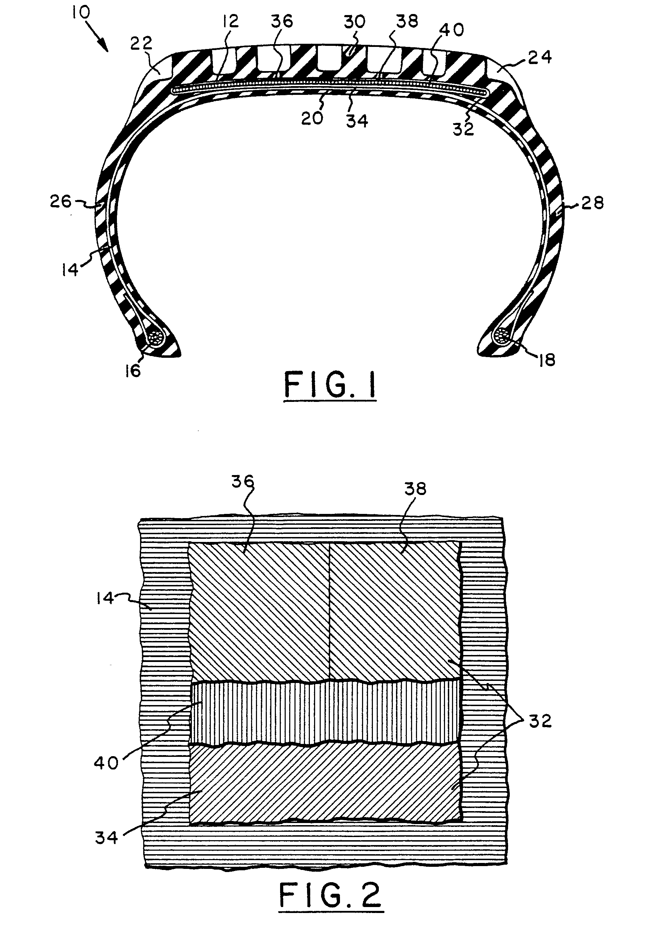

Referring now to Figure 1, there is shown a radial cross-sectional view of a pneumatic tire 10 having a tread-reinforcement structure 12 constructed in accordance with the present invention. Pneumatic tire 10 is a radial ply tire, that is to say it has a carcass which is a radial ply carcass. As used herein, a carcass comprises at least one carcass ply 14 of carcass-reinforcing elements, such as cords or cables, which are anchored at the radially inward extremities of the tire around substantially inextensible circular beads 16, 18; the carcass has a crown region 20 which is defined axially by the tread shoulders 22, 24. The sidewalls 26, 28 which extend radially inward from the shoulders to the beads are considered herein to be a part of the carcass. The carcass of the tire 10 is a "radial ply carcass", which is defined for the purpose of describing and claiming the present invention as a tire carcass in which the reinforcing elements of the carcass ply are oriented at between 80 degrees and 90 degrees with respect to the mid-circumferential plane of the tire. A tread portion 30 of elastomeric material, which is not a part of the carcass, extends circumferentially about the crown region of the carcass.

A tread-reinforcement structure 12 constructed in accordance with the present invention is disposed circumferentially about the crown region 20 of the carcass, and is interposed between the carcass ply 14 and the tread portion 30. The tread-reinforcement structure 12 can best be described by referring to both Figure 1 and Figure 2, which is a view looking radially inward toward the tread-reinforcement structure 12 of the tire 10 shown in Figure 1. The first tread-reinforcing ply 32 is located radially outward of and overlies the crown region of the carcass ply 14. The reinforcing elements of the first tread-reinforcing ply may be non-metallic cords, or metallic wires or cables, of a material selected in accordance with good engineering practices to have sufficient tensile strength when acting in cooperation with the reinforcing elements of the second tread-reinforcing ply 40 to resist penetration of the crown region 20 of the carcass of the tire, especially in a radial direction, by a foreign object. The plunger energy that is required for a particular tire design may be determined by considering the environment in which the tire will be used, or if applicable, by referring to industry and government standards for particular sizes of tires. The reinforcing elements of the first belt ply are embedded in an elastomeric substance such as natural or synthetic rubber, and form an angle of between about 20 degrees and about 60 degrees relative to the mid-circumferential plane of the tire, with such an angle sometimes referred to in the tire technologies as a "bias angle". For instance, in an 11/75 R 24.5 radial truck tire, it has been found that a bias angle of about 20 degrees for the first belt works quite well when the first ply has reinforcing elements of metallic cables. By "metallic cables" is meant a plurality of intertwined metallic wires. The first tread-reinforcing ply 32 has an axial width which is divided into a central portion 34 and two axial edge portions 36, 38. A second tread-reinforcing ply 40 has at least one circumferential layer of reinforcing elements embedded in an elastomeric substance forming an angle of between about zero degrees and about ten degrees relative to the mid-circumferential plane of the tire, and is disposed radially outward of and adjacent to the central portion 34 of the first tread-reinforcing ply 32. The reinforcing cords of the second reinforcing ply may be applied by either continuous wrapping from a spool or calendered fabric. It has been found that in an 11/75 R 24.5 radial truck tire that the reinforcing elements of the second tread-reinforcing ply should form an angle of substantially zero degrees, that is, between about zero degrees and about ten degrees, relative to the mid-circumferential plane of the tire when the reinforcing elements of the second tread-reinforcing ply are metallic cables. Of course, the number of layers in the second tread-reinforcing ply is dependent upon the amount of plunger energy that the tire is determined to need, the material selected for the reinforcing elements and the spacing between the reinforcing elements. The axial edge portions 36, 38 of the first tread-reinforcing ply 32 are then folded radially outwardly and axially inwardly to meet or abut, but not overlap, at or near the mid-circumferential plane of the tire, so that the second tread-reinforcing ply 40 is interposed circumferentially between the central portion 34 and the axial edge portions 36, 38 of the first tread-reinforcing ply. In other words, the first tread-reinforcing ply completely envelops the second tread-reinforcing ply. The second tread-reinforcing ply has a width, with respect to the axis of rotation of the tire, that is substantially the same as the width of the central portion of the first tread-reinforcing ply.

It may be observed from Figure 2 that a tread-reinforcement structure manufactured in accordance with the present invention has a high "stacking density". As used herein, "stacking density" shall mean the number of reinforcing elements that will resist the penetration in a radial direction by a foreign object in a given unit area. A foreign object which attempts to penetrate the tread-reinforcement structure shown in Figure 2 will be resisted by reinforcing elements presenting a lattice of closed geometric figures, at least one-half of which are triangular. The exact percentage of the geometric figures in the lattice that are triangles will, of course, be dependent upon the spacing between the reinforcing elements in each tread-reinforcing ply.

Prior art tread-reinforcement structures, in which the reinforcing elements of the folded tread-reinforcing ply were substantially perpendicular to the mid-circumferential plane of the tire, presented only square or rectangular geometric figures in the lattice of reinforcing elements which were more easily distorted by a penetrating foreign object that pushed the reinforcing elements apart. However, a tread-reinforcement structure constructed in accordance with the present invention has a pattern of reinforcing elements that is not easily distorted, and that may not be penetrated until the foreign object exerts a plunger energy that is substantially equal to the combined tensile strengths of the reinforcing elements in the area that the foreign object is attempting to penetrate.

While zero-degree tread-reinforcing belts have been employed in tires in the past to obtain improved high-speed performance characteristics, the function of the zero-degree tread-reinforcing belts was essentially of an auxiliary nature. However, tires having tread-reinforcement structures constructed in accordance with the present invention are designed with sufficient strength in the second tread-reinforcing ply, which is a zero-degree belt, to handle the static and dynamic forces acting upon the tire with a margin of safety. The second tread-reinforcing ply of the present invention is not merely an overlay for one specific application, such as the known use of narrow strips of lightweight nylon at belt edges to act as an auxiliary belt in high-speed applications of certain tires.

The envelopment of the second tread-reinforcing ply by the first tread-reinforcing ply is an important structural feature of the present invention. The envelopment stops a chain reaction of the displacement of the reinforcing elements of the second tread-reinforcing ply due to the penetration of a foreign object. Without the envelopment containing the displacement, the only resistance to displacement would be the elastomeric material in which the reinforcing elements are embedded, but the envelope makes the compression of the elastomeric material between reinforcing cords much more difficult, thus increasing the resistance of the reinforcing elements to displacement by a foreign object.

## Claims

1. Pneumatic tire comprising a carcass (14) and a crown region (20), a tread portion (30) disposed circumferentially about the crown region (20) and a tread reinforcement structure (12) disposed circumferentially between the carcass (14) and the tread portion (30), the reinforcement structure (12) comprising a first tread reinforcing ply (32) of parallel reinforcing elements, said reinforcing elements forming an angle of between 20° and 60° relative to the mid-circumferential plane of the tire, the first tread reinforcing ply (32) having a central portion (34) and two axial edge portions (36, 38), the axial edge portions (36, 38) being folded radially outwardly and axially inwardly, and a second tread reinforcing ply (40) of at least one unfolded circumferential layer of parallel reinforcing elements, having a width with respect to the axis of rotation of said tire, that is substantially the same as that of the central portion (34) of the first tread reinforcing ply (32), whereby the second tread reinforcing ply (40) is interposed circumferentially between the center portion (34) and axial edge portions (36, 38) of the first reinforcing ply (32) characterized in that the axial edge portions (36, 38) of the first tread reinforcing ply (32) meet, but do not overlap, at the mid-circumferential plane of the tire and that the reinforcing elements of the second tread reinforcing ply (40) form an angle of between 0° and 10° relative to the mid-circumferential plane of the tire.

2. Pneumatic tire according to claim 1, characterized in that the carcass (14) is a radial ply carcass.

3. Pneumatic tire according to claims 1 or 2 characterized in that the reinforcing elements of the first (32) and second (40) tread reinforcing plies are metallic wires or cables.

## Patentansprüche

1. Luftreifen mit einer Karkasse (14) und einem Kronenbereich (20), mit einem Laufflächenabschnitt (30), der in Umfangsrichtung um den Kronenbereich (20) angeordnet ist, und mit einem Laufflächenverstärkungsaufbau (12), der in Umfangsrichtung zwischen der Karkasse (14) und dem Laufflächenabschnitt (30) angeordnet ist, wobei der Verstärkungsaufbau (12) eine erste, die Lauffläche verstärkende Lage (32) aus parallelen Verstärkungselementen aufweist, die einen Winkel gegenüber der mittleren Umfangsebene (Äquatorialebene) des Reifens von 20° bis 60° bilden, wobei die erste Verstärkungslage (32) für die Lauffläche einen Zentralabschnitt (34) und zwei axiale Kantenabschnitte (36, 38) aufweist, wobei die axialen Kantenabschnitte (36, 38) radial nach außen und axial nach innen gefaltet sind, und wobei eine zweite Verstärkungslage (40) für die Lauffläche aus wenigstens einer ungefalteten, in Umfangsrichtung umlaufenden Lage aus parallelen Verstärkungselementen vorgesehen ist, die eine Breite bezüglich der Drehachse des Reifens aufweist, die im wesentlichen gleich ist der des Zentralabschnitts (34) der ersten Verstärkungslage (32) für die Lauffläche, wobei die zweite Verstärkungslage (40) für die Lauffläche in Umfangsrichtung zwischen dem Zentralabschnitt (34) und den axialen Kantenabschnitten (36, 38) der ersten Verstärkungslage (32) angeordnet ist, dadurch gekennzeichnet, daß die axialen Kantenabschnitte (36, 38) der ersten Laufflächen-Verstärkungslage (32) sich in der mittleren Umfangsebene (Äquatorialebene) des Reifens treffen, sich dort aber nicht überlappen, und daß die Verstärkungselemente der zweiten Laufflächen-Verstärkungslage (40) einen Winkel zwischen 0° und 10° bezüglich der mittleren Umfangsebene (Äquatorialebene) des Reifens bilden.

2. Luftreifen nach Anspruch 1, dadurch gekennzeichnet, daß die Karkasse (14) eine Gürtelreifenkarkasse ist.

3. Luftreifen nach Anspruch 1 oder 2, dadurch gekennzeichnet, daß die Verstärkungselemente der ersten (32) und der zweiten (40) Laufflächen-Verstärkungslage metallische Drähte oder Seile sind.

## Revendications

1. Bandage pneumatique comprenant une carcasse (14) et une zone de sommet (20), une bande de roulement (30) disposée circonférentiellement autour de la zone de sommet (20) et une structure de renforcement de bande de roulement (12) disposée circonférentiellement entre la carcasse (14) et la bande de roulement (30), la structure de renforcement (12) comprenant une première nappe de renforcement de bande de roulement (32) constituée d'éléments de renforcement parallèles, lesquels forment un angle compris entre 20° et 60° par rapport au plan circonférentiel médian du bandage pneumatique, la première nappe de renforcement de bande de roulement (32) comportant une partie centrale (34) et deux parties marginales axiales (36, 38), les parties marginales axiales (36, 38) étant repliées radialement vers l'extérieur et axialement vers l'intérieur, ainsi qu'une seconde nappe de renforcement de bande de roulement (40) constituée d'au moins une couche circonférentielle non repliée d'éléments de renforcement parallèles, ayant, par rapport à l'axe de rotation du bandage pneumatique, une largeur qui est pratiquement identique à celle de la partie centrale (34) de la première nappe de renforcement de bande de roulement (32), de telle sorte que la seconde nappe de renforcement de bande de roulement (40) soit intercalée circonférentiellement entre la partie centrale (34) et les parties marginales axiales (36, 38) de la première nappe de renforcement (32), caractérisé en ce que les parties marginales axiales (36, 38) de la première nappe de renforcement de bande de roulement (32) se rejoignent, mais sans se chevaucher, au plan circonférentiel médian du bandage pneumatique, tandis que les éléments de renforcement de la seconde nappe de renforcement de bande de roulement (40) forment un angle compris entre 0° et 10° par rapport au plan circonférentiel médian du bandage pneumatique.

2. Bandage pneumatique selon la revendication 1, caractérisé en ce que la carcasse (14) est une carcasse radiale.

3. Bandage pneumatique selon la revendication 1 ou 2, caractérisé en ce que les éléments de renforcement de la première (32) et de la seconde (40) nappe de renforcement de bande de roulement sont des câbles ou des fils métalliques.

FIG. 1

FIG. 2

1